# EUROPEAN PATENT SPECIFICATION

(11) **EP 2 531 082 B1**
(45) Date of publication and mention of the grant of the patent: **05.06.2013**
(21) Application number: 11700262.6
(22) Date of filing: 12.01.2011
(51) Int. Cl.: A47J 31/44, A47J 31/46

(54) **AUTOMATIC COFFEE MACHINE**
AUTOMATISCHES KAFFEE-GERÄT
MACHINE AUTOMATIQUE À CAFÉ

(30) Priority: 04.02.2010 IT MI20100166
(43) Date of publication of application: 12.12.2012
(73) Proprietor: De'Longhi Appliances S.r.l., 31100 Treviso (IT)
(72) Inventor: DE' LONGHI, Giuseppe, I-31100 Treviso (IT)
(74) Representative: Rapisardi, Mariacristina
(86) International application number: PCT/EP2011/050329
(87) International publication number: WO 2011/095378

(56) References cited:
- WO-A2-2005/102126
- DE-B3-102006 043 903

## Description

The present invention refers to an automatic coffee machine comprising a milk container, lateral with respect to the coffee dispenser group and to an emulsifying device able to emulsion the milk in order to send it in a cup where it mixes with the coffee for producing a cappuccino.

The coffee dispenser group generally has two exit ways through which it is possible to serve at the same time two coffee cups placed on a support for cups in the zone under the coffee dispenser group of the coffee itself.

Such automatic coffee machines illustrated by two WO 2005/102126, generally offer a limited use versatility, due to the fact that they are able to prepare only one cappuccino at a time, eventually a cappuccino and a coffee at the same time, but never two cappuccinos at the same time.

This is derived from the fact that the two exit ways of the coffee dispenser are positioned in the width direction of the coffee machine, and therefore only one of them is adjacent to the emulsified milk dispenser.

Furthermore also a cup is not adjacent to the emulsified milk dispenser and this configuration complicates the insertion of a correct quantity of emulsified milk in such a cup,

The technical task of the present invention is that to realize an automatic coffee machine permitting to eliminate the technical drawbacks lamented in the known technique.

Within this technical task an aim of the invention is that to realize an automatic coffee machine having more versatility of use for the automatic preparation of a plurality of cappuccinos at the same time.

Another aim of the invention is that to realize an automatic coffee machine able to always guarantee the delivery of the correct quantity of emulsified milk in the cups of cappuccino prepared at the same time.

A further aim of the present invention is that to provide an automatic coffee machine having the aforementioned versatility of use without having to modify substantially its encumbrance.

A further aim of the present invention is to provide an automatic coffee machine having the aforementioned versatility of use without substantial structural changes.

The technical task, and also these and other aims of the present invention are reached by realizing an automatic coffee machine comprising a milk container associated to an milk emulsifier device contained in said container with air and steam from a steam dispenser of said coffee machine, and a front group for dispensing coffee having in turn a first and at least a second exit way for the coffee, oriented towards a lower positioning zone of a first and at least a second cups, characterized in that said emulsifier device is provided with an emulsified milk dispenser, placed laterally to said front group of coffee dispenser and having in turn a first and at least a second exit way for the emulsified milk, oriented towards said positioning zone and offset in the direction of the depth of the coffee machine, said coffee dispenser having at least a first work position in which also said first and at least a second exit way for coffee are offset in the depth direction of the coffee machine.

Preferably the coffee dispenser group can rotate, and in particular it has a rotation axis substantially parallel to the height direction of the coffee machine.

Preferably the first and the second exit ways for coffee are in a diametrical opposed position and at the same radial distance from said rotation axis.

Preferably at said first work position, said first and second exit ways for coffee are placed parallel to the depth direction of the coffee machine.

Preferably said coffee dispenser group has a second work position at which said first and second exit ways for coffee are placed in parallel to the direction of width of the coffee machine. Preferably said emulsified coffee dispenser is pivotally supported between a first work position in which said first and at least a second exit way for emulsified milk are at a first level over the coffee rest of the coffee machine and a second work position in which said first and at least a second exit way of the emulsified milk are at a second level, lower than said first level over the coffee rest of the coffee machine.

Preferably said emulsified milk dispenser has a telescopic structure.

Preferably said emulsified milk dispenser is Y-shaped.

Preferably said emulsified milk dispenser has a rotation axis substantially parallel to the depth direction of the coffee machine.

The milk container is preferably placed on the cup rest of the coffee machine, but it can also be positioned lateral with respect to the same.

The emulsifying device in a first preferred embodiment of the invention is supported by the milk container or by a cover of the same.

The emulsifying device in a second preferred embodiment of invention is supported by the steam dispenser, and in this last case the milk container can be remotely associated with the emulsifying device by means of a flexible tube.

Further characteristics and advantages of the invention will be clearer from the description of a preferred but non exclusive embodiment, of the automatic coffee machine according to the founding, shown in an indicative and non limited way in the annexed drawings, in which:

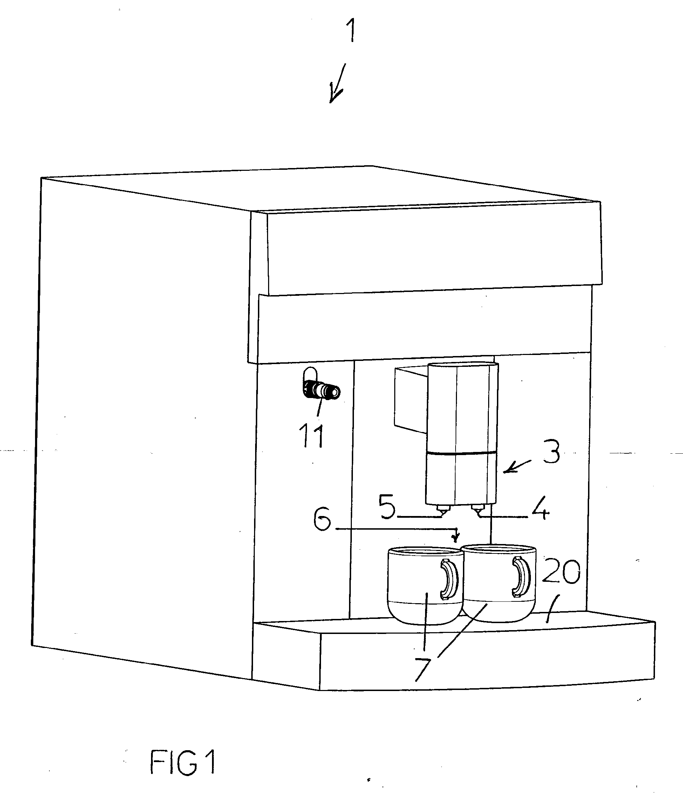

Figure 1 shows a perspective view of the automatic coffee machine with the coffee dispenser in its second work position for producing at the same time two coffees and with the milk container removed from the cup rest;

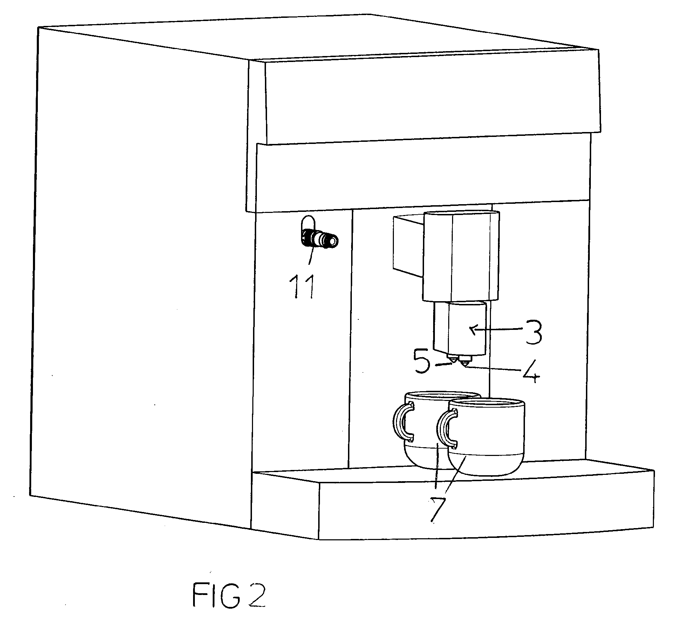

Figure 2 shows a perspective view of the automatic coffee machine with the coffee dispenser in its first work position for producing at the same time two coffees, and with the milk container removed from the cup rest;

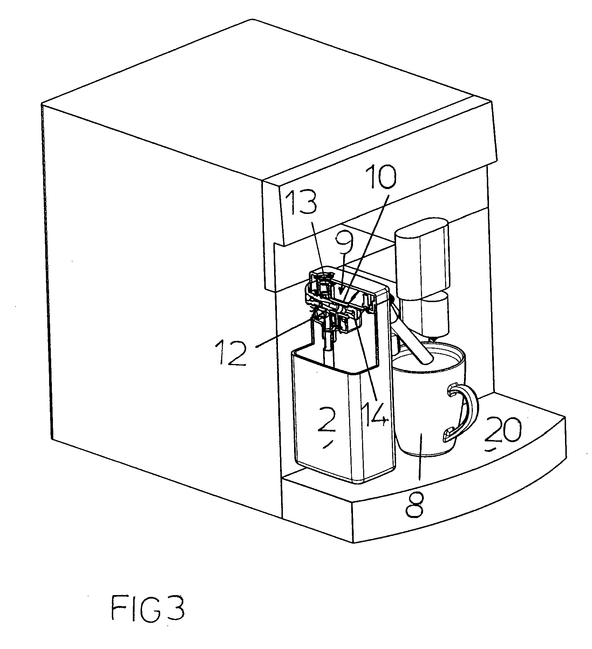

Figure 3 shows a perspective view of the automatic coffee machine with the coffee dispenser in its first work position for producing a cappuccino, and with the milk container partially in section for simplicity aims;

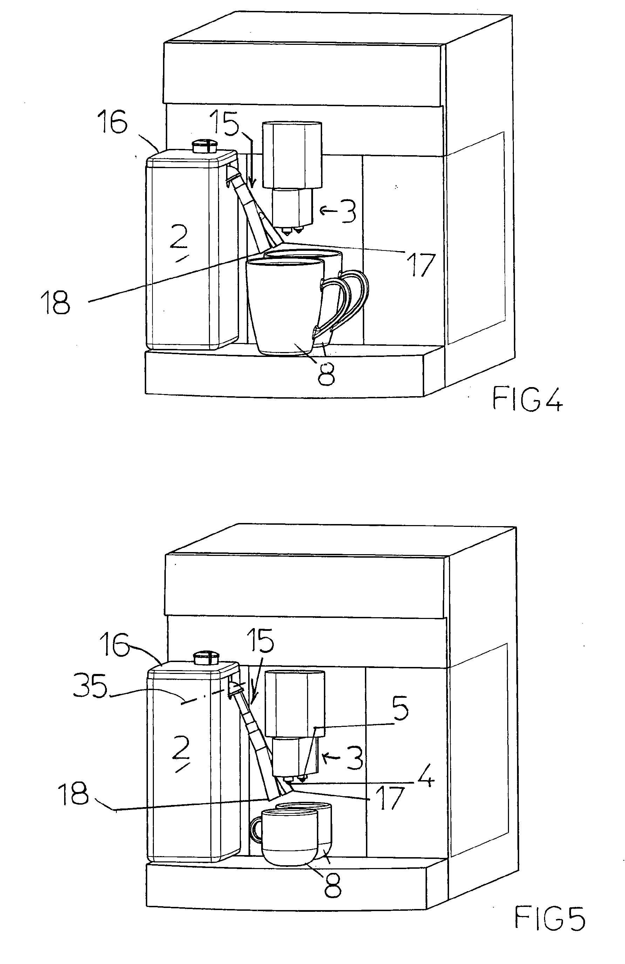

Figure 4 shows a perspective view of the automatic coffee machine with the coffee dispenser in its first work position for producing at the same time two cappuccinos;
Figure 5 shows a perspective view of the automatic coffee machine and with the coffee dispenser in its first work position for producing at the same time two cappuccinos in lower cups with respect to the ones shown in Figure 4;

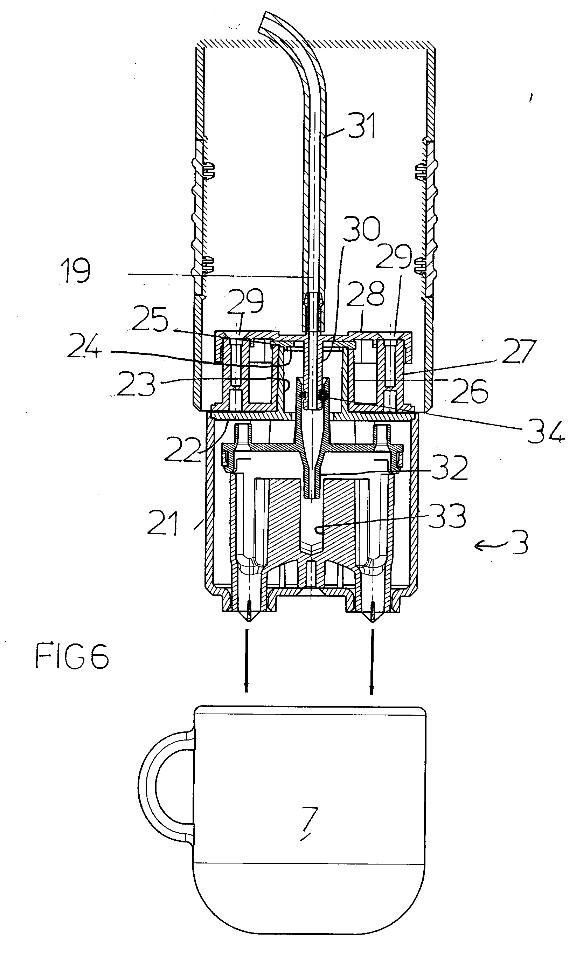

Figure 6 shows an axial section of the coffee dispenser.

With reference to the cited figures, an automatic coffee machine indicated as a whole with the reference number 1 is shown.

The automatic coffee machine 1 comprises a front group 3 for dispensing coffee, having in a first exit way 4 for the coffee and a second exit way 5 for the coffee, oriented in a lower zone 6 of positioning of coffee cups7 and/or cappuccino cups 8.

To a milk container 2 is associated an emulsifying device 9 comprising a chamber 10 having an inlet 13 for the steam, connected to a steam dispenser 11 of the machine 1, an inlet (not shown) for the air, an inlet 12 for the milk to emulsify contained in the container 2 and an exit 14 for the milk emulsified with air and steam, connected to a dispenser 15 for the emulsified milk.

The inner section of the steam dispenser 11 is shaped like a venturi tube in order to optimize the suction of the milk to emulsify and of the air in the steam flow.

The emulsifying device can be supported or incorporated into the container 2 or, as shown, into the cover 16 of the same.

In some cases in a different preferred embodiment of the invention, the emulsifying device 9 can be supported by the frame of the machine 1 or by the steam dispenser 11 on which for example it can be housed. In this case the container 2 can be in a remote position from the emulsifying device 9 to which it is associated, by means of a flexible tube able to supply to the emulsifying device 9 the milk to emulsify present in the container 2. In such a case the milk container 2 can be of the disposable type, for example in a food paperboard (Tetra Pack^{™}).

In any case the milk container 2, also with the emulsifying device 9 when it is supported or incorporated in the container 2, as in the shown case, or even in its cover 16, can be removed from the remaining parts of the machine 1 for keeping the milk in a refrigerator.

The steam dispenser 11 can be positioned at the front wall of the machine and it can have a horizontal or substantially horizontal axial direction or it can be placed in other parts of the machine and with a different direction, for example a vertical one.

The emulsified milk dispenser 15 is placed lateral with respect to the front group 3 for dispensing coffee and it has in turn a first exit way 17 of the emulsified milk and a second exit way 18 of the emulsified milk oriented towards the positioning zone 6 and offset in the depth direction of the coffee machine 1.

The coffee dispenser 3 has a first work position in which also the first exit way 4 of the coffee and the second way 5 of the coffee are offset in the depth direction of the coffee machine 1.

The coffee dispenser 3 can rotate and it has a rotary axis 19 parallel to the height direction of the coffee machine 1. In other words the rotary axis 19 develops vertically and orthogonally to the rest of the coffee machine. The first exit way of the coffee 4 and the second exit way 5 are in a position diametrically opposed and at the same radial distance from the rotary axis 19.

At the first work position of the coffee dispenser 3, the first exit way 4 for the coffee and the second exit way 5 for the coffee are placed parallel to the depth direction of the coffee machine, whereas at the second work position of the coffee dispenser 3, which can be obtained by rotation at 90°, the first exit way 4 and the second exit way 5 for the coffee are placed parallel to the width direction of the coffee machine.

The structure of the coffee dispenser 3 comprises a box-shaped body 21 bringing in a fixed way an upper cover 22 from the external side of which extends centrally a cylindrical formation 23 internally hollow which in turn brings in a fixed way a cover 24 having a peripheral edge 25 radially protruding with respect to the cylindrical formation 23.

The cylindrical formation 23 is coaxially inserted in a drive cylindrical compass 26 that is part of a shaped body 27 fixed with respect to the coffee machine 1 over the coffee dispenser 3.

The coffee dispenser 3 is pivotally sustained by a fixed body 27 by means of a support of the peripheral edge 25 of the cover 24 on the apex edge of the guide compass 26.

The box-shaped body 21 is bound with respect of the translation in the direction of the rotary axis 19 by means of a closing plate 28 superimposed on the cover 24 and fixed by screws 29 to the body 27.

The contact pressure between the cover 24 and the parts among which it is interposed, i.e. the compass 26 and the closing plate 28, is such to permit in any case to rotate around the rotary axis 19.

The closing plate 28 is crossed by a tubular pipe 30 which engages with its upper end with a tube 31 for supplying coffee and with its lower end engages with a nozzle 32 directed towards a lower blind duct 33 able to cause the flow inversion of the coffee for improving the flow distribution in the exit ways 4 and 5.

Between the branch 30 and the nozzle 32 a sealing ring 34 is interposed, favouring its relative rotation.

The emulsifying milk dispenser 15 is supported in a rotating way between a first work position in which the first exit way 17 and the second exit way 18 of the emulsifying milk are at a first level over the cup rest 20 of the coffee machine 1 and a second work position in which the first exit way 17 of the emulsifying milk and the second exit way 18 are at a lower level than the first level over the cup rest 20 of the coffee machine 1.

The emulsifying milk dispenser 15 has in particular a rotary axis 35 parallel to the depth direction of the coffee machine 1.

The possibility to regulate the emulsifying milk dispenser 15 permits to control the position of the first exit way 17 and of the second exit way 18 of the emulsified milk for cappuccino cups 8 also with different heights, by limiting the production of hot milk sprays.

The emulsified milk dispenser 15 has a telescopic structure in order to extend and retire with the height of the cup 8 to which it has to approach each time more and more, in order to minimize the production of hot milk sprays.

The dispenser 15 is also Y-shaped.

Such configuration permits the diversion of the flow of emulsified milk with the optimum angle so that the first exit way 17 of the emulsified milk and the second exit way 18 of the emulsified milk are directed in two places of the positioning zone 6, so spaced that they can serve together a single cappuccino cup 8 and individually a respective cappuccino cup 8 when two cappuccino cups 8 are juxtaposed in the depth direction of the coffee machine 1 in the positioning zone 6 of the cup rest 20.

The passage section of the exit ways 17 and 18 of the emulsified milk is the same, in order to permit an equal division of the emulsified milk flow in the two cappuccino cups 8.

In the shown solution, the milk container 2 is placed directly on the cup rest 20 of the coffee machine, but it is also in a different preferred embodiment, here not shown, could be placed laterally with respect to the cup rest 20.

The operation of the coffee machine 1 is clear from what here described.

When the coffee dispenser 3 is in the second work position, it is possible also to produce a coffee, according to the selection made by the user, by means of the control panel of the coffee machine 1, by positioning the coffee cup 7 under the two exit ways 4 and 5 for coffee, or for cappuccino, by positioning the cappuccino cup 8 under the two exit ways 17 and 18 of the emulsified milk, or two coffees at the same time, by positioning each coffee cup 7 under a respective exit way 4 and 5 of coffee.

When on the contrary the coffee dispenser 3 is in the first work position, operated by the user by means of the control panel of the coffee machine 1, is possible to produce a coffee, a cappuccino, two coffees at the same time, or a cappuccino and a coffee at the same time, but also two cappuccinos at the same time by juxtaposing the two cappuccino cups 8 in the depth direction of the coffee machine 1, such as to bring the cappuccino cup 8 at the same time under the exit way 17 of the emulsified milk and under the exit way 5 of the coffee, and the other cappuccino cup 8 at the same time, under the exit way 18 of the emulsified milk and under the exit way of the coffee.

The coffee machine so conceived is susceptible of various changes and variations within the scope of the claims; also all the details are changeable with technical equivalent elements.

In practice the used materials, and also their size, could be any according to the needs and to the state of the art.

## Claims

1. Automatic coffee machine (1) comprising a milk container (2) associated with an emulsifying device (9) of the milk contained in said container (2) with air and steam coming from a steam dispenser (11) of said coffee machine (1), and a front unit (3) for dispensing the coffee in turn having a first (4) and at least a second (5) exit way for the coffee orientated towards an underlying area (6) for positioning a first (7, 8) and at least a second (7, 8) cup, **characterised in that** said emulsifying device (9) has a dispenser (15) for the emulsified milk positioned alongside said front coffee dispensing unit (3) and provided in turn with a first (17) and at least a second (18) exit way for the emulsified milk orientated towards said positioning area (6) and staggered in the direction of the depth of the coffee machine, said coffee dispenser (3) having at least a first work position in which also said first (4) and at least a second (5) coffee exit way are staggered in the direction of the depth of the coffee machine.

2. Automatic coffee machine (1) according to the preceding claim, wherein said coffee dispenser unit (3) is revolving.

3. Automatic coffee machine (1) according to the preceding claim, wherein said coffee dispenser unit (3) has a rotation axis (19) substantially parallel to the direction of the height of the coffee machine.

4. Automatic coffee machine (1) according to the preceding claim, wherein said first (4) and second (5) coffee exit way are in a diametrically opposite position and at the same radial distance from said rotation axis (19).

5. Automatic coffee machine (1) according to one or more of the preceding claims, wherein, in that in position corresponding to said first work position, said first (4) and second (5) coffee exit way are arranged parallel to the direction of the depth of the coffee machine.

6. Automatic coffee machine (1) according to one or more of the preceding claims, wherein said coffee dispensing unit (3) has a second work position at which said first (4) and second (5) coffee exit way are arranged parallel to the direction of the width of the coffee machine.

7. Automatic coffee machine (1) according to one or more of the preceding claims, wherein said emulsified milk dispenser (15) is supported in a revolving way between a first work position in which said first (17) and at least a second (18) emulsified milk exit way are at a first height above the cup rest (20) of the coffee machine and a second work position in which said first (17) and at least a second (18) emulsified milk exit way are at a second height lower than said first height above the cup rest (20) of the coffee machine.

8. Automatic coffee machine (1) according to the preceding claim, wherein said emulsified milk dispenser (15) has a telescopic structure.

9. Automatic coffee machine (1) according to the preceding claim, wherein said emulsified milk dispenser (15) has a "Y" shape.

10. Automatic coffee machine (1) according to the preceding claim, wherein said emulsified milk dispenser (15) has a rotation axis (35) substantially parallel to the direction of depth of the coffee machine.

11. Automatic coffee machine (1) according to one or more of the preceding claims, wherein said container (2) is positioned on the cup rest (20) of the coffee machine.

12. Automatic coffee machine (1) according to one or more of the preceding claims, wherein said container (2) is positioned alongside the cup rest (20) of the coffee machine.

13. Automatic coffee machine (1) according to one or more of the preceding claims, wherein said emulsifying device (9) is supported by said container (2) or by a cover of this.

14. Automatic coffee machine (1) according to one or more of the preceding claims, wherein said emulsifying device (9) is supported by said steam dispenser (11).

15. Automatic coffee machine (1) according to one or more of the preceding claims, wherein said container (2) is associated remotely with said emulsifying device (9) by means of a flexible hose.

## Patentansprüche

1. Automatisches Kaffee-Gerät (1), umfassend einen Milchbehälter (2), der mit einer Vorrichtung (9) zum Emulgieren mit Luft und Dampf der im Behälter (2) vorhandenen Milch verbunden ist, die aus einer Dampfausgabe (11) des Kaffee-Geräts (1) kommt, und eine stirnseitige Einheit (3) zur Ausgabe des Kaffees, die wiederum einen ersten (4) und mindestens einen zweiten (5) Ausgangsweg für den Kaffee aufweist, die zu einem darunterliegenden Bereich (6) zur Positionierung einer ersten (7, 8) und mindestens einer zweiten (7, 8) Tasse zeigen, **dadurch gekennzeichnet, dass** die Emulgiervorrichtung (9) eine Ausgabe (15) der emulgierten Milch aufweist, die neben der stirnseitigen Kaffeeausgabeeinheit (3) positioniert ist und wiederum mit einem ersten (17) und mindestens einem zweiten (18) Ausgangsweg der emulgierten Milch ausgestattet ist, die in Richtung des Positionierbereiches (6) zeigen und entgegen der Richtung der Tiefe des Kaffee-Gerätes versetzt sind, wobei die Kaffeeausgabeeinheit (3) mindestens eine erste Betriebsposition aufweist, in der auch der erste (4) und mindestens ein zweiter (5) Kaffeeausgangsweg in der Richtung der Tiefe des Kaffee-Gerätes versetzt sind.

2. Automatisches Kaffee-Gerät (1) nach dem vorangehenden Anspruch, wobei die Kaffeeausgabeeinheit (3) rotierend ist.

3. Automatisches Kaffee-Gerät (1) nach dem vorangehenden Anspruch, wobei die Kaffeeausgabeeinheit (3) eine Drehachse (19) aufweist, die im Wesentlichen parallel zur Richtung der Höhe des Kaffee-Gerätes ist.

4. Automatisches Kaffee-Gerät (1) nach dem vorangehenden Anspruch, wobei der erste (4) und zweite (5) Kaffeeausgangsweg in einer diametral einander gegenüberliegenden Position und im selben Radialabstand von der Drehachse (19) liegen.

5. Automatisches Kaffee-Gerät (1) nach einem oder mehreren der vorangehenden Ansprüche, wobei in der Position, die der ersten Betriebsposition entspricht, der erste (4) und der zweite (5) Kaffeeausgangsweg parallel zur Richtung der Tiefe des Kaffee-Geräts liegen.

6. Automatisches Kaffee-Gerät (1) nach einem oder mehreren der vorangehenden Ansprüche, wobei die Kaffeeausgabeeinheit (3) eine zweite Betriebsposition aufweist, in der der erste (4) und zweite (5) Kaffeeausgangsweg parallel zur Richtung der Breite des Kaffee-Geräts angeordnet sind.

7. Automatisches Kaffee-Gerät (1) nach einem oder mehreren der vorangehenden Ansprüche, wobei die Ausgabe (15) der emulgierten Milch zwischen einer ersten Betriebsposition, in der der erste (17) und mindestens ein zweiter (18) Ausgangsweg emulgierter Milch in einer ersten Höhe über der Tassenablage (20) des Kaffee-Geräts liegen, und einer zweiten Betriebsposition, in der der erste (17) und mindestens ein zweiter (18) Ausgangsweg emulgierter Milch in einer zweiten Höhe liegen, die geringer als die erste Höhe über der Tassenablage (20) des Kaffee-Geräts ist, rotierend getragen wird.

8. Automatisches Kaffee-Gerät (1) nach dem vorangehenden Anspruch, wobei die Ausgabe (15) der emulgierten Milch eine teleskopartige Struktur aufweist.

9. Automatisches Kaffee-Gerät (1) nach dem vorangehenden Anspruch, wobei die Ausgabe (15) der emulgierten Milch eine "Y"-Form aufweist.

10. Automatisches Kaffee-Gerät (1) nach dem vorangehenden Anspruch, wobei die Ausgabe (15) der emulgierten Milch eine Drehachse (35) aufweist, die im Wesentlichen parallel zur Richtung der Tiefe des Kaffee-Gerätes ist.

11. Automatisches Kaffee-Gerät (1) nach einem oder mehreren der vorangehenden Ansprüche, wobei der Behälter (2) auf der Tassenablage (20) des Kaffee-Gerätes positioniert ist.

12. Automatisches Kaffee-Gerät (1) nach einem oder mehreren der vorangehenden Ansprüche, wobei der Behälter (2) neben der Tassenablage (20) des Kaffee-Gerätes positioniert ist.

13. Automatisches Kaffee-Gerät (1) nach einem oder mehreren der vorangehenden Ansprüche, wobei die Emulgiervorrichtung (9) vom Behälter (2) oder von einem Deckel davon getragen wird.

14. Automatisches Kaffee-Gerät (1) nach einem oder mehreren der vorangehenden Ansprüche, wobei die Emulgiervorrichtung (9) von der Dampfausgabe (11) getragen wird.

15. Automatisches Kaffee-Gerät (1) nach einem oder mehreren der vorangehenden Ansprüche, wobei der Behälter (2) entfernt mit der Emulgiervorrichtung (9) mithilfe eines flexiblen Schlauchs verbunden ist.

## Revendications

1. Machine automatique à café (1) comprenant un récipient à lait (2) associé à un dispositif à émulsifier (9) le lait contenu dans ledit récipient (2) avec de l'air et de la vapeur provenant d'un distributeur de vapeur (11) de ladite machine à café (1), et une unité frontale (3) pour distribuer le café ayant à son tour une première (4) et au moins une seconde (5) voie de sortie pour le café orienté vers une zone sous-jacente (6) afin de positionner une première (7, 8) et au moins une seconde (7, 8) tasse, **caractérisée en ce que** ledit dispositif à émulsifier (9) possède un distributeur (15) de lait émulsifié positionné sur le côté de ladite unité frontale de distribution de café (3) et pourvue à son tour d'une première (17) et au moins d'une seconde (18) voie de sortie pour le lait émulsifié orientée vers ladite zone de positionnement (6) et décalée dans la direction de la profondeur de la machine à café, ledit distributeur de café (3) ayant au moins une première position de fonctionnement dans laquelle aussi lesdites première (4) et au moins seconde (5) voies de sortie de café sont décalées dans la direction de la profondeur de la machine à café.

2. Machine automatique à café (1) selon la revendication précédente, dans laquelle ladite unité de distribution de café (3) est pivotante.

3. Machine automatique à café (1) selon la revendication précédente, dans laquelle ladite unité de distribution de café (3) possède un axe de rotation (19) essentiellement parallèle à la direction de la hauteur de la machine à café.

4. Machine automatique à café (1) selon la revendication précédente, dans laquelle lesdites première (4) et seconde (5) voies de sortie de café sont situées dans une position diamétralement opposée et sont situées à une distance radiale identique dudit axe de rotation (19).

5. Machine automatique à café (1) selon l'une ou plusieurs des revendications précédentes, dans laquelle, dans la position correspondant à ladite première position de fonctionnement, lesdites première (4) et seconde (5) voies de sortie de café sont disposées parallèlement à la direction de la profondeur de la machine à café.

6. Machine automatique à café (1) selon l'une ou plusieurs des revendications précédentes, dans laquelle ladite unité de distribution de café (3) possède une seconde position de fonctionnement, à laquelle lesdites première (4) et seconde (5) voies de sortie de café sont disposées parallèlement à la direction de la largeur de la machine à café.

7. Machine automatique à café (1) selon l'une ou plusieurs des revendications précédentes, dans laquelle ledit distributeur de lait émulsifié (15) est supporté d'une façon pivotante entre une première position de fonctionnement dans laquelle ladite première (17) et au moins une seconde (18) voies de sortie de lait émulsifié se situent à une première hauteur au-dessus du repose-tasse (20) de la machine à café et une seconde position de fonctionnement dans laquelle ladite première (17) et au moins une seconde (18) voies de sortie de lait émulsifié se situent à une seconde hauteur inférieure à ladite première hauteur située au-dessus du repose-tasse (20) de la machine à café.

8. Machine automatique à café (1) selon la revendication précédente, dans laquelle ledit distributeur de lait émulsifié (15) possède une structure télescopique.

9. Machine automatique à café (1) selon la revendication précédente, dans laquelle ledit distributeur de lait émulsifié (15) possède une forme en « Y ».

10. Machine automatique à café (1) selon la revendication précédente, dans laquelle ledit distributeur de lait émulsifié (15) possède un axe de rotation (35) essentiellement parallèle à la direction de la profondeur de la machine à café.

11. Machine automatique à café (1) selon l'une ou plusieurs des revendications précédentes, dans laquelle ledit récipient (2) est positionné sur le repose-tasse (20) de la machine à café.

12. Machine automatique à café (1) selon l'une ou plusieurs des revendications précédentes, dans laquelle ledit récipient (2) est positionné sur le côté du repose-tasse (20) de la machine à café.

13. Machine automatique à café (1) selon l'une ou plusieurs des revendications précédentes, dans laquelle ledit dispositif à émulsifier (9) est supporté par ledit récipient (2) ou par un couvercle de celui-ci.

14. Machine automatique à café (1) selon l'une ou plusieurs des revendications précédentes, dans laquelle ledit dispositif à émulsifier (9) est supporté par ledit distributeur de vapeur (11).

15. Machine automatique à café (1) selon l'une ou plusieurs des revendications précédentes, dans laquelle ledit récipient (2) est associé à distance au dit dispositif à émulsifier (9) au moyen d'un tuyau flexible.
